# FASCICULE DE BREVET EUROPEEN

(11) **EP 3 078 086 B1**
(45) Date de publication et mention de la délivrance du brevet: **21.03.2018**
(21) Numéro de dépôt: 14806603.8
(22) Date de dépôt: 02.12.2014
(51) Int. Cl.: G01J 1/42, G01J 1/04, G02B 17/00, G02B 27/09, G02B 27/10, H01S 3/00

(54) **DISPOSITIF D'ECHANTILLONNAGE D'UN FAISCEAU LASER A HAUTE ENERGIE ET GRANDE TAILLE ASSOCIE A UN COMPRESSEUR**
ABTASTEVORRICHTUNG FÜR EINEN HOCHENERGETISCHEN UND GROSSFLÄCHIGEN LASERSTRAHL, IN ZUSAMMENHANG MIT EINEM KOMPRESSOR.
SAMPLING DEVICE FOR A HIGH ENERGY AND LARGE AREA LASER BEAM ASSOCIATED WITH A COMPRESSOR.

(30) Priorité: 04.12.2013 FR 1302820
(43) Date de publication de la demande: 12.10.2016
(73) Titulaire: Thales, 92400 Courbevoie (FR)
(72) Inventeur: LAUX, Sebastien, 91120 Palaiseau (FR); JOUGLA, Paul, 75015 Paris (FR); LUREAU, François, 75016 Paris (FR)
(74) Mandataire: Henriot, Marie-Pierre
(86) Numéro de dépôt international: PCT/EP2014/076175
(87) Numéro de publication internationale: WO 2015/082435

(56) Documents cités:
- EP-A1- 2 654 142
- US-A- 5 648 976
- US-A1- 2011 268 389

## Description

Le domaine de l'invention est celui de l'échantillonnage d'un faisceau laser impulsionnel à haute énergie typiquement supérieure à 1J, et à grande taille, c'est-à-dire ayant un diamètre typiquement supérieur à 1 cm. Les impulsions laser considérées ont typiquement une durée inférieure à 1 ps, voire même de l'ordre de la fs.

Pour réaliser une analyse représentative d'un faisceau laser, on prélève un échantillon de ce faisceau (=on échantillonne le faisceau).

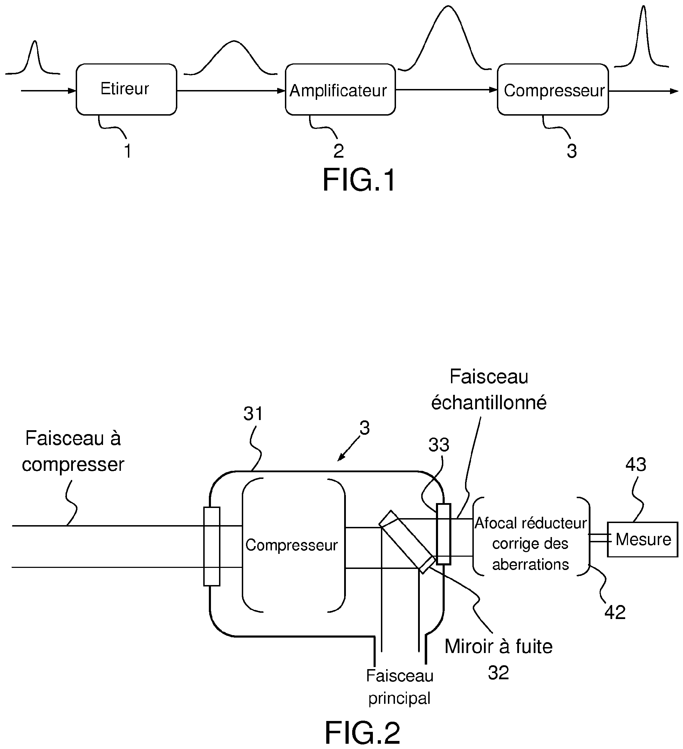

On rappelle qu'un faisceau laser impulsionnel à haute énergie et grande taille est obtenu au moyen d'un équipement CPA acronyme de l'expression anglo-saxonne « Chirped Pulse Amplifier » (ou équipement d'amplification laser par compression d'impulsions) que l'on peut voir figure 1 et qui comporte en entrée un étireur 1 apte à étirer une impulsion laser à faible énergie en fonction de la longueur d'onde, relié à un amplificateur 2 apte à amplifier l'impulsion étirée en une impulsion étirée à haute énergie, et relié à un compresseur sous vide 3 apte à compresser l'impulsion étirée et amplifiée. En sortie du compresseur on obtient une impulsion laser à haute énergie et à grande taille, transmise sous vide pour des énergies supérieures à 4 TW. Dans les lasers de classe TW voire multi PW, le diamètre de l'impulsion laser en sortie du compresseur est de classe centimétrique voire métrique.

Pour réaliser la caractérisation spatio-temporelle d'un tel système de forte énergie, il est nécessaire de ne prélever qu'une très faible partie du faisceau pour ne pas endommager le dispositif d'analyse, et de réduire sa taille afin de l'adapter à celle de ce dispositif d'analyse en conservant ses propriétés.

Il est connu d'échantillonner un tel faisceau à l'aide :
- d'un miroir 32 dit « à fuite » montré figure 2, placé dans l'enceinte 31 sous vide du compresseur mais en sortie des éléments de compression et en amont d'un hublot de sortie 33, et qui présente une transmission inférieure à 2% pour ne prélever qu'un petit échantillon du faisceau principal compressé,
- d'un afocal réducteur 42 corrigé des aberrations, situé en aval du hublot de sortie du compresseur, et
- d'un dispositif 43 de mesure du faisceau échantillonné réduit.

On rappelle que le sens amont aval est celui de la propagation du faisceau laser.

Mais un tel dispositif d'échantillonnage présente plusieurs inconvénients :
- Le faisceau échantillonné a traversé le miroir à fuite 32 avant d'être mesuré. Dans le cas d'une mesure de durée d'impulsion ultra-courte, il est nécessaire de s'assurer que le chemin optique parcouru par chaque longueur d'onde (i.e. la phase spectrale) qui constitue l'impulsion soit le même sur le faisceau principal et le faisceau échantillonné. Il faut également conserver de manière fidèle la distribution spectrale de l'énergie (i.e. l'intensité spectrale). Il faut donc compenser cette traversée sur le chemin optique du faisceau principal compressé qui lui a été réfléchi et n'a donc pas traversé le matériau du miroir 32. Mais un tel compensateur est difficile à réaliser compte tenu de l'énergie du faisceau principal en sortie du compresseur. En effet, un tel faisceau endommagerait tout matériau à traverser.
- D'autre part, le faisceau échantillonné subit les distorsions du miroir à fuite, qui sont également difficiles à compenser sur le faisceau principal.
- En outre, une transmission très faible (i.e. <2%) nécessite une très bonne homogénéité du prélèvement sur toute la pupille du miroir et sur toute la bande spectrale du miroir. Obtenir des transmissions inférieures à 2% avec des variations inférieures à 0.2% est très difficile à réaliser pour les fabricants de miroir à fuite.

US 2011 0268 389 divulgue un dispositif d'échantillonnage et mesure d' un faisceau laser impulsionnel à haute énergie et à grand diamètre, comportant un dispositif de prélèvement du faisceau situé en amont du compresseur. En conséquence, il demeure à ce jour un besoin pour un système permettant pour ces faisceaux de forte énergie et de grande taille, de réaliser un échantillonnage sans en transformer les propriétés spatio-temporelles.

Plus précisément l'invention a pour objet un dispositif d'échantillonnage d'un faisceau laser impulsionnel à haute énergie et à grand diamètre comme définit dans la revendication 1. Dans cette configuration, on a remplacé l'utilisation d'un miroir à fuite par la réflexion sur un dioptre. Cette solution permet donc d'obtenir un faisceau échantillonné homogène sur une large pupille et représentatif du faisceau à analyser. En effet, le faisceau échantillonné ne subit pas de distorsions lié à une inhomogénéité du prélèvement, le faisceau prélevé est fonction uniquement de l'indice optique n du prélèvement qui est identique quelle que soit la position dans la pupille du faisceau à analyser. On peut alors utiliser le faisceau échantillonné pour sonder le compresseur de large ouverture et utiliser un compensateur de petite ouverture facilement caractérisable appliqué au signal échantillonné.

Selon cette configuration, le faisceau échantillonné traverse moins de matériau que le faisceau original, contrairement au cas présenté en préambule, avec un miroir à fuite. Il est alors possible de compenser la traversée de matériau sur le chemin optique du signal échantillonné via un compensateur facilement caractérisable.

Selon une caractéristique de l'invention, le dispositif d'échantillonnage comporte sur le trajet du faisceau échantillonné, un compensateur de chemin optique, apte à augmenter le chemin optique de ce faisceau échantillonné.

L'invention a aussi pour objet un dispositif d'analyse d'un faisceau laser impulsionnel à haute énergie et à grand diamètre issu d'un compresseur, qui comprend un dispositif d'échantillonnage tel que décrit ci-dessus et destiné à être associé audit compresseur, et un dispositif de mesure du faisceau échantillonné et compressé.

L'invention concerne également un équipement d'amplification laser par compression d'impulsions qui comprend un étireur, un amplificateur, un compresseur, apte à produire en sortie du compresseur un faisceau laser impulsionnel à haute énergie et à grand diamètre, caractérisé en ce qu'il comprend un dispositif d'analyse tel que décrit.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement une chaîne amplificatrice selon l'état de la technique,
la figure 2 déjà décrite représente schématiquement un compresseur associé à un dispositif d'échantillonnage selon l'état de la technique,
la figure 3 représente schématiquement un exemple de compresseur associé à un dispositif d'échantillonnage selon l'invention,
la figure 4 illustre schématiquement des exemple d'empreintes du faisceau échantillonné et du faisceau principal dans l'ouverture utile d'un compresseur associé à un dispositif d'échantillonnage selon l'invention,
les figures 5 illustrent la comparaison entre le coefficient de la transmission d'un miroir à fuite avec celui de la réflexion sur un dioptre en silice fondue (fig 5a), et l'intensité spectrale d'un spectre gaussien obtenue dans ces deux cas (fig 5b),
la figure 6 illustre la différence d'intensité spectrale d'un spectre gaussien après traversée d'un miroir à fuite et après réflexion sur un dioptre, quand l'impulsion n'est plus centrée sur la même longueur d'onde,
la figure 7 illustre la différence d'intensité temporelle d'une impulsion gaussienne temporelle avant et après la traversée d'un matériau d'épaisseur e (40mm) à un angle de 45°.

D'une figure à l'autre, les mêmes éléments sont repérés par les mêmes références.

Pour réaliser une analyse représentative de l'impulsion laser à haute énergie et à grande taille obtenue en sortie du compresseur, il est nécessaire pour cela de s'assurer que le faisceau principal et le faisceau échantillonné subissent les mêmes modifications spatio-temporelles, le long de leurs trajets respectifs.

On va tout d'abord détailler les problèmes posés par un dispositif d'échantillonnage à miroir à fuite :
- la transmission du miroir à fuite ou son épaisseur doivent être faibles pour éviter des effets non linéaires de type SPM acronyme de l'expression anglo-saxonne « Self Phase Modulation » pendant la transmission du laser dans le miroir. On rappelle que les effets non linéaires dépendent notamment de la puissance crête de l'impulsion en entrée et de l'épaisseur de matériau traversé. Pour garder les effets non linéaires dans des limites raisonnables comme par exemple une intégrale B du pulse transmis inférieure à 1, le taux de transmission du miroir à fuite doit donc être de l'ordre de 0.1%, ce qui pose le problème suivant.
- A titre d'illustration prenons un miroir à haute réflectivité ou HR dont la réflectivité est de 99.9% à la longueur d'onde λ1 et 99.8% à la longueur d'onde λ2.
   La distorsion de l'impulsion réfléchie qui est la distorsion entre les deux longueurs d'onde est de ((99.9-99.8)/(99.9))= 0.001. La distorsion de l'impulsion réfléchie est donc très faible. Dans le cas de l'impulsion transmise, la longueur d'onde λ1 est transmise à 0.2% et la longueur d'onde λ2 est transmise à 0.1%. Pour l'impulsion transmise, la distorsion entre les deux longueurs d'onde est de ((0.2-0.1)/(0.2))= 50%. La distorsion dans ce cas est donc très élevée.
   Le profil spectral du faisceau transmis (= faisceau échantillonné) n'est donc pas du tout ressemblant au faisceau utile réfléchi : il est plus large, et peut être centré à une autre longueur d'onde. Les mesures temporelles seront faussées par ces distorsions.
- Dans les lasers de classe TW voire multi PW, où le diamètre de l'impulsion laser dans le compresseur est de classe centimétrique voire métrique, l'épaisseur du miroir de fuite doit être de l'ordre de plusieurs cm pour garantir un front d'onde réfléchi de bonne qualité (sans aberrations de front d'onde), alors que cette épaisseur doit être faible pour limiter les effets non linéaires comme on l'a vu plus haut.
- D'autre part, le faisceau original est réfléchi par le miroir HR, il ne traverse aucun matériau. Le faisceau échantillonné lui, traverse le substrat du miroir. Le chemin optique parcouru par les deux faisceaux est donc différent, les deux faisceaux ne subissent donc pas les mêmes distorsions spatio-temporelles.

La solution selon l'invention consiste à réaliser le prélèvement de l'échantillon en amont du compresseur. Puis après avoir réduit la taille du faisceau échantillonné pour l'adapter à la taille de l'appareil de mesure, il est juxtaposé avec le faisceau principal pour être compressé par le compresseur dans les mêmes conditions spatio-temporelles que le faisceau principal.

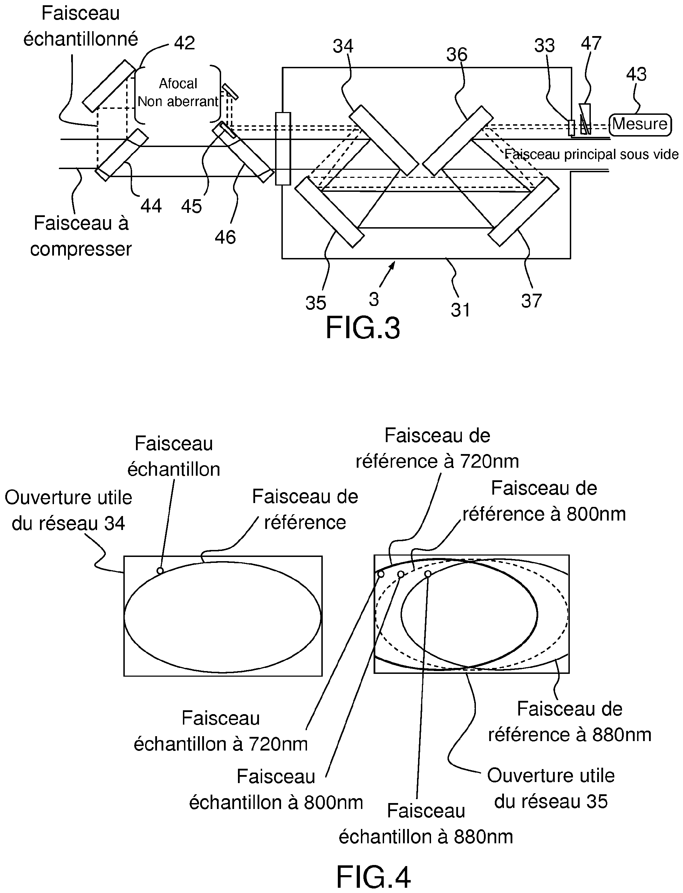

Plus précisément, le dispositif d'échantillonnage décrit en relation avec la figure 3, comporte en amont du compresseur 3 :
- un dispositif de prélèvement assuré par un dioptre d'échantillonnage 44 par exemple en silice ou du BK7, apte à transmettre T% du faisceau laser impulsionnel à compresser (T>90 voire même supérieur à 99), le faisceau transmis étant désigné faisceau principal ou de référence tout au long de son trajet en aval de ce dioptre 44, et à en réfléchir (1-T)%, le faisceau réfléchi étant désigné faisceau échantillonné. Lors de la traversée du dioptre 44, aucun effet non linéaire ne se produit car il s'agit du faisceau étiré qui ne présente pas encore la puissance crête qu'il atteindra en sortie du compresseur.
- sur le trajet du faisceau échantillonné :
   o un afocal 42 apte à réduire la taille du faisceau échantillonné, comportant de préférence des optiques catadioptriques pour conserver les propriétés du faisceau échantillonné ;
   ∘ un dispositif de réinjection du faisceau échantillonné réduit dans l'ouverture utile du compresseur 3. Ce dispositif de réinjection est par exemple un miroir 45 destiné à réfléchir le faisceau échantillonné réduit vers l'ouverture utile du compresseur 3 en le juxtaposant au faisceau principal. Un compresseur comporte de manière classique un ou plusieurs éléments dispersifs tels que dioptres ou réseaux dispersifs en réflexion 34, 35, 36, 37, ou des réseaux dispersifs en transmission, chacun de ces éléments ayant une ouverture utile comme illustré figure 4. Sur cette figure sont représentées l'ouverture utile du réseau 34 d'une part sur laquelle arrivent le faisceau principal et le faisceau échantillonné réduit qui n'ont pas encore subi de dispersion spectrale, et l'ouverture utile du réseau 35 d'autre part sur laquelle arrivent le faisceau principal et le faisceau échantillonné réduit qui ont tous deux subi une première dispersion par le réseau 34 (trois longueurs d'onde sont représentées sur cette figure) ; on remarquera que le faisceau échantillonné et le faisceau principal sont juxtaposés dans chaque cas. On rappelle que l'ouverture utile du compresseur est définie par la partie commune aux ouvertures utiles de tous ces éléments dispersifs.
- éventuellement, on place sur le trajet du faisceau principal en amont du compresseur, un dioptre 46 symétrique du dioptre d'échantillonnage 44. Ce dioptre peut comporter une partie assurant la fonction du miroir 45 de réinjection, l'autre partie étant destinée à transmettre le faisceau principal ; les deux faisceaux étant juxtaposés sur ce dioptre, il est alors désigné dioptre de recombinaison 46.

Le faisceau principal et le faisceau échantillonné ont traversé des substrats différents. Le faisceau principal compressé a traversé le dioptre d'échantillonnage 44 et éventuellement un dioptre de recombinaison 46. Le faisceau échantillonné compressé a traversé quant à lui le hublot de sortie 33 vers le dispositif de mesure 43. Le dispositif d'échantillonnage comporte donc en outre un compensateur 47 de chemin optique pour que le chemin optique de chacun de ces deux faisceaux soit identique. Il s'agit d'un compensateur de dispersion placé sur le trajet du faisceau échantillonné en aval du compresseur 3 comme montré sur la figure (ou éventuellement en amont) afin d'obtenir la même dispersion sur les deux faisceaux. Ce compensateur 47 de petite ouverture et facilement caractérisable est par exemple un dioptre d'épaisseur ajustable qui peut être constitué de deux prismes comme montré sur la figure, et qui permet d'augmenter le chemin optique parcouru pour chaque longueur d'onde du faisceau échantillonné compressé (i.e. phase spectrale). Ceci est possible car le faisceau principal compressé traverse plus d'épaisseur de matériau que le faisceau échantillonné compressé, contrairement au dispositif d'échantillonnage avec miroir à fuite décrit en préambule, où c'est le faisceau échantillonné qui traverse le substrat du miroir.

Selon l'invention, l'échantillonnage est réalisé en temps réel.

La demanderesse a comparé les résultats obtenus avec un dispositif d'échantillonnage avec miroir à fuite et avec un dispositif d'échantillonnage selon l'invention.

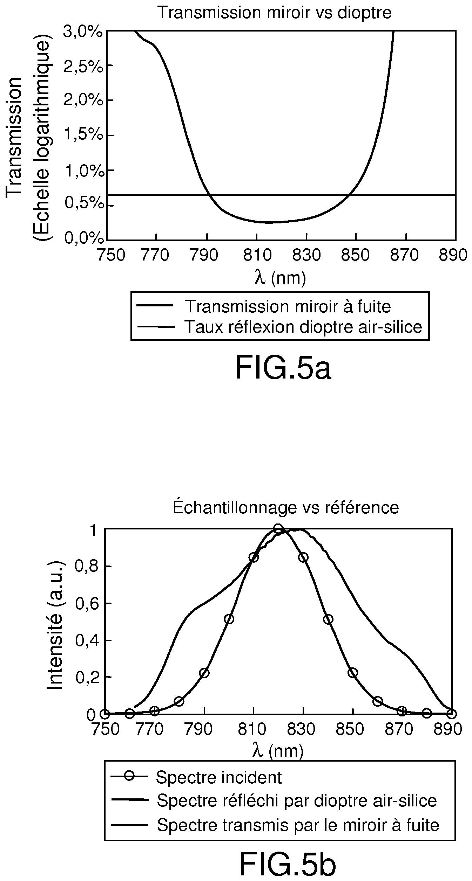

La figure 5a présente une comparaison entre le coefficient de la transmission d'un miroir à fuite avec celui de la réflexion sur un dioptre en silice fondue. La réponse du dioptre est relativement linéaire comparée à celle du miroir à fuite sur des plages de l'ordre de 100nm centrée à 820nm, ce que confirme la figure 5b qui présente l'intensité spectrale d'une impulsion gaussienne temporelle de durée 25fs, d'une largeur de 40nm à mi-hauteur centrée à 820nm. On observe en effet que l'impulsion de référence et l'impulsion réfléchie sur le dioptre sont identiques, alors que l'impulsion transmise via le miroir à fuite distord fortement le signal : l'impulsion transmise n'est donc pas représentative de l'impulsion réfléchie.

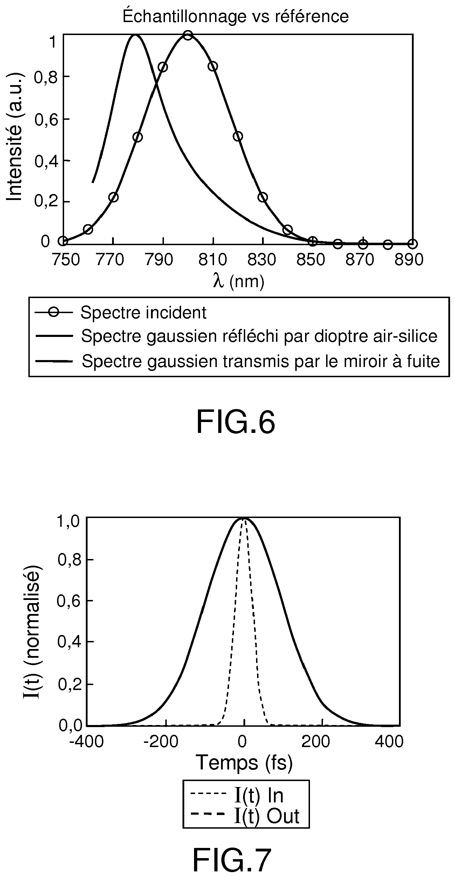

Un autre avantage du prélèvement sur un dioptre est la sensibilité à la longueur d'onde centrale du signal. La figure 6 montre la différence de comportement entre le miroir à fuite et le dioptre quand l'impulsion n'est plus centrée à 820nm mais à 800nm, ce qui peut arriver. On observe que l'intensité du prélèvement via un dioptre est insensible à la longueur d'onde centrale au contraire de celle du prélèvement par un miroir à fuite.

Concernant la différence de chemin optique (i.e. phase spectrale), la figure 7 illustre l'influence de la traversée d'un matériau d'épaisseur e (40mm) à un angle de 45° sur une impulsion gaussienne temporelle de durée 25fs et de largeur à mi-hauteur de 40nm centrée à 820nm. On observe que l'intensité du prélèvement via le miroir de fuite distord fortement le signal : l'impulsion transmise n'est donc pas représentative de l'impulsion réfléchie. On notera que si cette distorsion s'applique également lors de la traversée du dioptre d'échantillonnage 44 par le faisceau principal, elle est alors compensée par le compresseur réglé en conséquence. L'impulsion échantillonnée réduite subit également dans le compresseur ainsi réglé une distorsion inverse ; cependant le compensateur 47 placé sur le chemin optique du faisceau échantillon permet de rattraper cet écart.

## Revendications

1. Ensemble d'échantillonnage et de mesure d'un faisceau laser impulsionnel à haute énergie et à grand diamètre, destiné à être associé à un compresseur (3) présentant une ouverture utile, ledit ensemble comprenant:
- un dispositif de prélèvement dudit faisceau, destiné à être placé en amont d'un compresseur (3), ce dispositif de prélèvement étant muni d'un dioptre d'échantillonnage (44) apte à transmettre T% d'un faisceau laser impulsionnel à compresser, T étant supérieur à 90 et à réfléchir (1-T)% du faisceau laser impulsionnel à compresser, le faisceau réfléchi étant désigné faisceau échantillonné,
- un afocal (42) apte à réduire la taille du faisceau échantillonné et destiné à être placé en amont dudit compresseur (3),
- un dispositif (45) de réinjection disposé après ledit afocal (42), ledit dispositif de réinjection (45) destiné à être placé en amont dudit compresseur (3) et à réinjecter le faisceau échantillonné réduit dans ladite ouverture utile du compresseur (3), et
- un dispositif (43) de mesure du faisceau échantillonné et compressé destiné à être placé en aval du compresseur (3).

2. Ensemble d'échantillonnage et de mesure selon la revendication précédente, **caractérisé en ce qu'**il comporte sur le trajet du faisceau échantillonné, un compensateur (47) de chemin optique, apte à augmenter le chemin optique de ce faisceau échantillonné.

3. Ensemble d'échantillonnage et de mesure selon la revendication précédente, **caractérisé en ce que** le compensateur (47) est situé en aval du compresseur (3) et devant le dispositif (43) de mesure du faisceau échantillonné.

4. Ensemble d'échantillonnage et de mesure selon l'une des revendications précédentes, **caractérisé en ce que** le faisceau laser impulsionnel a une énergie supérieure à 1J et un diamètre supérieur à 1 cm.

5. Dispositif d'analyse d'un faisceau laser impulsionnel qui comprend un compresseur (3) et un ensemble d'échantillonnage et de mesure selon l'une des revendications précédentes.

6. Equipement d'amplification laser par compression d'impulsions qui comprend un étireur (1), un amplificateur (2), et un dispositif d'analyse d'un faisceau laser impulsionnel selon la revendication précédente.

## Patentansprüche

1. Abtast- und Messanordnung für einen hochenergetischen Impuls-Laserstrahl mit großem Durchmesser, bestimmt zum Gebrauch mit einem Kompressor (3), welcher eine Nutzöffnungsweite besitzt, wobei die Anordnung Folgendes beinhaltet:
- eine Entnahmevorrichtung für den Strahl, dazu bestimmt, im vorgelagerten Bereich eines Kompressors (3) platziert zu werden, wobei die Entnahmevorrichtung mit einem Abtaste-Diopter (44) ausgestattet ist, der geeignet ist, T % eines zu komprimierenden Impuls-Laserstrahls zu übertragen, wobei T größer als 90 ist, und (1-T) % des zu komprimierenden Impuls-Laserstrahls zu reflektieren, wobei der reflektierte Lasterstrahl als abgetasteter Strahl bezeichnet wird,
- ein afokales Element (42), geeignet, die Größe des abgetasteten Strahls zu verkleinern und dazu bestimmt, im vorgelagerten Bereich des Kompressors (3) platziert zu werden,
- eine Rückführvorrichtung (45), angeordnet hinter dem afokalen Element (42), wobei die Rückführvorrichtung (45) dazu bestimmt ist, im vorgelagerten Bereich des Kompressors (3) platziert zu werden und den verkleinerten, abgetasteten Strahl in die Nutzöffnungsweite des Kompressors (3) zurückzuführen, und
- eine Messvorrichtung (43) für den abgetasteten und komprimierten Strahl, welche dazu bestimmt ist, im nachgelagerten Bereich des Kompressors (3) platziert zu werden.

2. Abtast- und Messanordnung nach dem vorhergehenden Anspruch, **dadurch gekennzeichnet, dass** sie auf dem Weg des abgetasteten Strahls einen Kompensator (47) der optischen Weglänge beinhaltet, welcher geeignet ist, den optischen Weg des abgetasteten Strahls zu erhöhen.

3. Abtast- und Messanordnung nach dem vorhergehenden Anspruch, **dadurch gekennzeichnet, dass** der Kompensator (47) im nachgelagerten Bereich des Kompressors (3) und vor der Vorrichtung (43) zum Messen des abgetasteten Strahls angeordnet ist.

4. Abtast- und Messanordnung nach einem der vorhergehenden Ansprüche, **dadurch gekennzeichnet, dass** der Impuls-Laserstrahl eine Energie von über 1J und einen Durchmesser von über 1 cm besitzt.

5. Analysevorrichtung eines Impuls-Laserstrahls, welche einen Kompressor (3) und eine Abtast- und Messanordnung nach einem der vorhergehenden Ansprüche beinhaltet.

6. Impulskompressions-Laserverstärkungseinrichtung, beinhaltend eine Streckvorrichtung (1), einen Verstärker (2) und eine Analysevorrichtung eines Impuls-Laserstrahls nach dem vorhergehenden Anspruch.

## Claims

1. An assembly for sampling and measuring a high energy and large diameter pulsed laser beam, intended to be combined with a compressor (3) exhibiting a useful aperture, said assembly comprising:
- a sample-taking device for said beam, intended to be positioned upstream of a compressor (3), this sample-taking device being provided with a sampling diopter (44) capable of transmitting T% of a pulsed laser beam to be compressed, T being greater than 90, and of reflecting (1-T)% of the pulsed laser beam to be compressed, the reflected beam being called the sampled beam,
- an afocal (42) capable of reducing the size of the sampled beam and intended to be positioned upstream of said compressor (3),
- a reinjection device (45) positioned after said afocal (42), said reinjection device (45) intended to be positioned upstream of said compressor (3) and to reinject the reduced sampled beam into said useful aperture of the compressor (3), and
- a measuring device (43) for the sampled and compressed beam intended to be positioned downstream of the compressor (3).

2. The assembly for sampling and measuring according to the preceding claim, **characterised in that** it comprises, on the path of the sampled beam, an optical path compensator (47), capable of increasing the optical path of this sampled beam.

3. The assembly for sampling and measuring according to the preceding claim, **characterised in that** the compensator (47) is positioned downstream of the compressor (3) and in front of the measuring device (43) of the sampled beam.

4. The assembly for sampling and measuring according to any one of the preceding claims, **characterised in that** the pulsed laser beam has an energy greater than 1 J and a diameter greater than 1 cm.

5. A device for analysing a pulsed laser beam which comprises a compressor (3) and a sampling and measuring device according to any one of the preceding claims.

6. An equipment item for laser amplification by pulse compression which comprises a stretcher (1), an amplifier (2), and a device for analysing a pulsed laser beam according to the preceding claim.
